# EUROPEAN PATENT SPECIFICATION

(11) **EP 3 974 929 B1**
(45) Date of publication and mention of the grant of the patent: **21.02.2024**
(21) Application number: 20808918.5
(22) Date of filing: 14.05.2020
(51) Int. Cl.: G05B 23/02, G06Q 10/00

(54) **DEVICE MANAGEMENT SYSTEM**
GERÄTEVERWALTUNGSSYSTEM
SYSTÈME DE GESTION DES DISPOSITIFS

(30) Priority: 21.05.2019 JP 2019095307
(43) Date of publication of application: 30.03.2022
(73) Proprietor: DAIKIN INDUSTRIES, LTD., Osaka-Shi, Osaka 530-0001 (JP)
(72) Inventor: INUGA, Shinya, Osaka-shi, Osaka 530-8323 (JP); KITAMURA, Masayasu, Osaka-shi, Osaka 530-8323 (JP)
(74) Representative: Global IP Europe Patentanwaltskanzlei
(86) International application number: PCT/JP2020/019279
(87) International publication number: WO 2020/235446

(56) References cited:
- EP-A1- 3 260 788
- JP-A- 2007 241 572
- JP-A- 2018 010 430
- US-A1- 2016 261 481
- US-A1- 2019 049 138

## Description

### TECHNICAL FIELD

The present disclosure relates to a device management system.

### BACKGROUND ART

As in PTL 1 (Japanese Unexamined Patent Application Publication No. 2012-193885), there is an apparatus that diagnoses the operation and the like of a device on the basis of measurement value data of the device.

US 2016/261481 A1, US 2019/049138 A1, and EP 260 788 A1 each disclose a device management system comprising: a management apparatus configured to manage device information, the device information including identification information of a device and operation data of the device; and a transmitting apparatus configured to collect the device information from the device and transmit the device information to the management apparatus, wherein the management apparatus or the transmitting apparatus is configured to monitor an abnormality in the device on the basis of the device information.

### SUMMARY OF INVENTION

### < Technical Problem >

An abnormality is more likely to occur in a device in a certain period after the device is installed than in a normal period.

### < Solution to Problem >

The present invention is set forth and characterized in the device management system of independent claim 1, while the dependent claims 2 to 5 describe other characteristics of the invention.

### BRIEF DESCRIPTION OF DRAWINGS

[Fig. 1] Fig. 1 is a schematic diagram illustrating the configuration of a device management system.
[Fig. 2] Fig. 2 is a schematic diagram illustrating the configuration of an air conditioner.
[Fig. 3] Fig. 3 is a schematic diagram illustrating the detailed configuration of the device management system.
[Fig. 4] Fig. 4 illustrates an example of transmission conditions.
[Fig. 5] Fig. 5 is a schematic diagram illustrating a flow of processing performed in a first period.

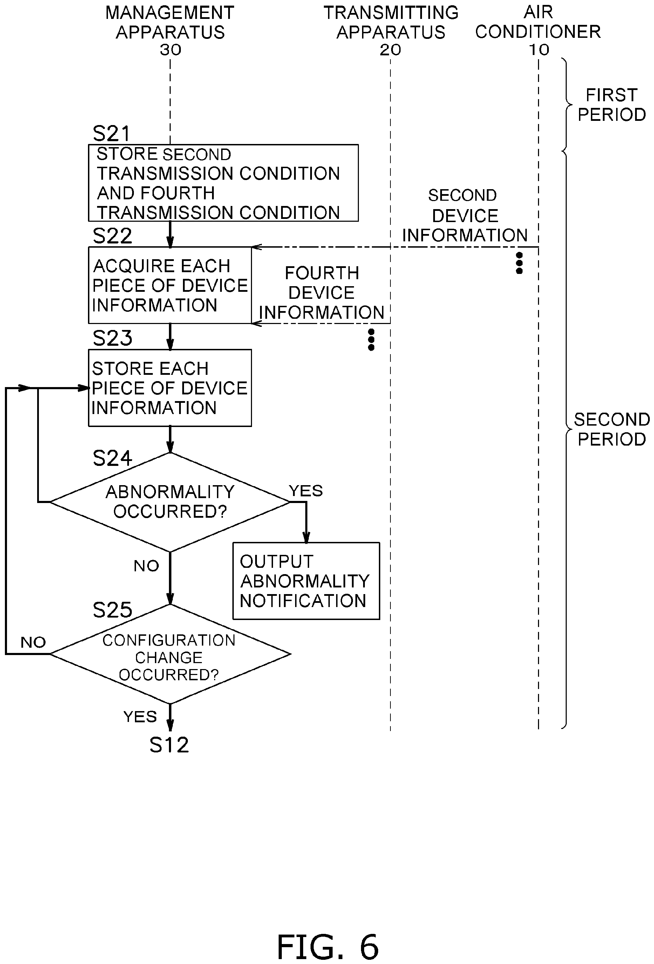

[Fig. 6] Fig. 6 is a schematic diagram illustrating a flow of processing performed in a second period.

### DESCRIPTION OF EMBODIMENTS

A device management system 100 according to the present disclosure will be described hereinafter. It should be noted that the following embodiment is a specific example and is not intended to limit the technical scope, but can be modified, as appropriate, without departing from the scope of the disclosure.

### (1) Overall Configuration

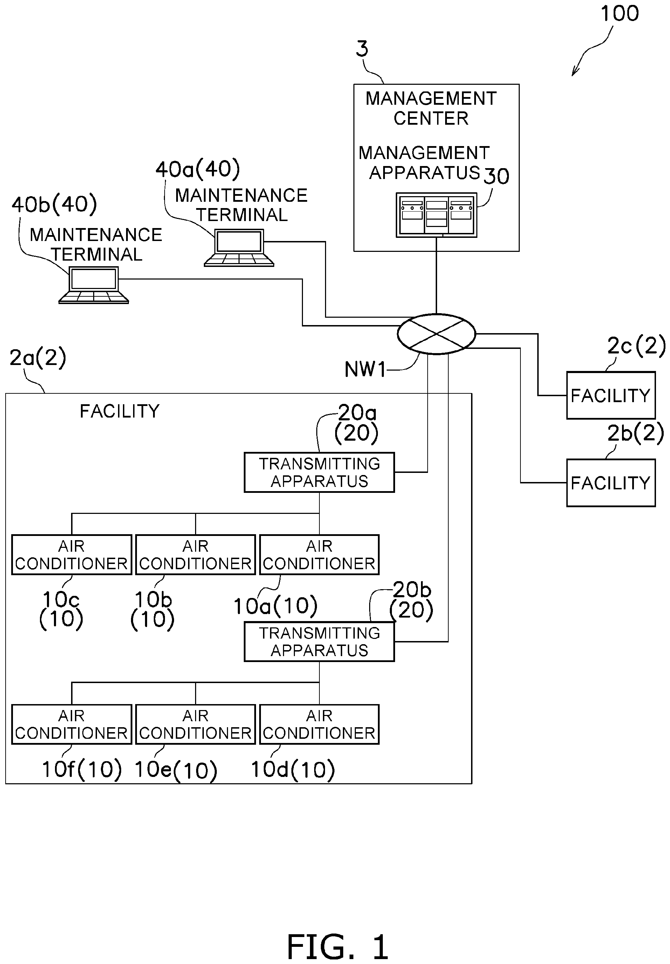

Fig. 1 is a schematic diagram illustrating the configuration of the device management system 100 according to an embodiment of the present disclosure. In the following description, a plurality of apparatuses having similar functions will be described using the same reference numerals when a description common to all of them is given. One apparatus out of a plurality of apparatuses having similar functions will be described using a suffix with a lower case letter when the one apparatus is distinguished from the others. For example, transmitting apparatuses 20a and 20b are apparatuses having similar functions and are represented by transmitting apparatuses 20 when a description common to the transmitting apparatuses 20a and 20b is given. While suffixes a, b, and the like are used for convenience of description, these represent any numbers, and their quantity is not limited thereto.

The device management system 100 is a system that manages a large number of devices and a large number of transmitting apparatuses 20 using a management apparatus 30. Here, the management apparatus 30 is installed in a central management center 3. A large number of facilities 2 (2a to 2c) exist in the control area of the central management center 3. The facilities 2 are, for example, an office building, a commercial building, and a condominium. Each of the facilities 2 is equipped with one or a plurality of air conditioners 10 (10a to 10f) as an example of a device to be managed. When air conditioners 10 are installed in each of the facilities 2, management point information of each of the air conditioners 10 is registered in the management apparatus 30. Each of the air conditioners 10 is connected to one of the plurality of transmitting apparatuses 20 (20a and 20b). In the device management system 100, the transmitting apparatuses 20 and the management apparatus 30 communicate device information to each other to manage the air conditioners 10 and the transmitting apparatuses 20. Specifically, the management apparatus 30 acquires operation data included in the respective pieces of device information of the air conditioners 10 and the transmitting apparatuses 20 to determine the presence or absence of an abnormality in the air conditioners 10 and the transmitting apparatuses 20. When an air conditioner 10 and a transmitting apparatus 20 are newly installed or when a configuration change occurs, the device management system 100 can detect an abnormality at an early stage by acquiring detailed device information.

The management apparatus 30 is connected to a plurality of maintenance terminals 40 (40a and 40b) via a communication network NW1. When an abnormality alarm for the air conditioners 10 is issued, the management apparatus 30 notifies the operators or the like of the maintenance terminals 40 of the issuance of the abnormality alarm.

The communication network NW1 includes a WAN (Wide Area Network) across a plurality of properties. For example, the communication network NW1 includes the Internet.

### (2) Detailed Configuration

### (2-1) Device

A device, which is a management target of the device management system 100 according to this embodiment, will be described hereinafter using, as an example, an "air conditioner", which performs an air conditioning operation such as cooling or heating of a target space. However, the management target of the device management system 100 according to this embodiment is not limited to an air conditioner, and any device having the following features can be adopted. For example, a ventilator, a humidity control device, an air handling unit, a chiller unit, and/or any other refrigeration apparatus or the like may be adopted as a "device".

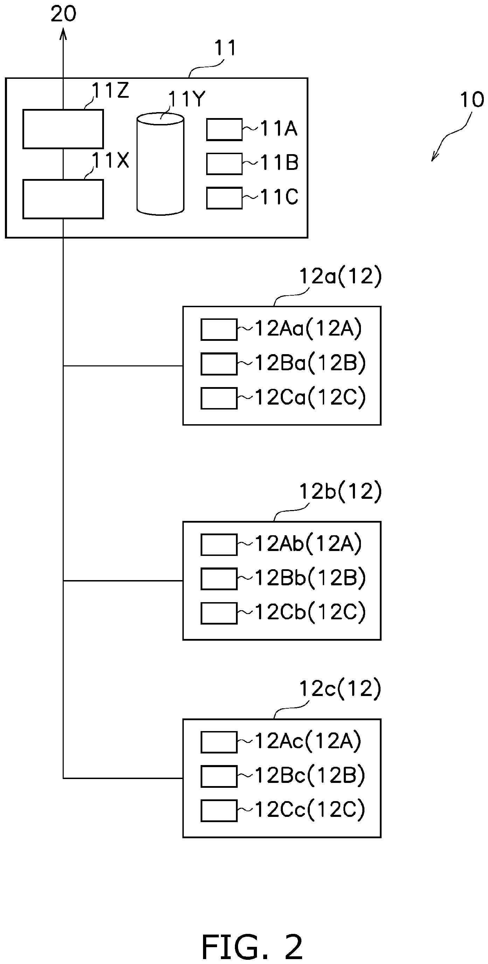

Fig. 2 is a schematic diagram illustrating the configuration of an air conditioner 10 according to this embodiment. The air conditioner 10 includes an outdoor unit 11 installed on the rooftop or the like of a facility 2, and a large number of indoor units 12 (12a to 12c) installed in rooms of the facility 2. The outdoor unit 11 and the indoor units 12 illustrated in Fig. 2 are connected to each other via a refrigerant circuit and constitute one refrigerant system. The outdoor unit 11 and the indoor units 12 are connected to each other via a dedicated communication line. The outdoor unit 11 includes a plurality of components 11A to 11C. The components 11A to 11C are, for example, a compressor, an outdoor heat exchanger, an outdoor fan, and so on. Each of the indoor units 12 includes a plurality of components 12A to 12C (12Aa to 12Ca, 12Ab to 12Cb, and 12Ac to 12Cc). The components 12A to 12C are, for example, an indoor heat exchanger, an outdoor fan, an expansion valve, and so on.

When the air conditioner 10 is installed (newly installed) in the control area of the central management center 3, management point information of the air conditioner 10 is stored (registered) in the management apparatus 30 of the central management center 3. The management point information of the air conditioner 10 includes identification information, a model name, a model code, an address, and system information of each of the air conditioner 10 and the components 11A to 11C and 12A to 12C, information on the transmitting apparatus 20 associated with the air conditioner 10, information on the maintenance terminal 40 associated with the air conditioner 10 and the transmitting apparatus 20, and so on. The identification information is, for example, a name, a machine number, a MAC address, or the like, and may be set in advance by an administrator or the like or may be set through the storage of the management point information in the management apparatus 30. The air conditioner 10 undergoes a configuration change, as necessary. The configuration change is, for example, addition, update, or removal of the air conditioner 10, the outdoor unit 11, or any one of the indoor units 12, or replacement of the components 11A to 11C and 12A to 12C included in the air conditioner 10. When a configuration change is performed on the air conditioner 10, the management point information of the air conditioner 10 stored in the management apparatus 30 is updated.

The outdoor unit 11 includes a collection unit 11X, a storage unit 11Y, and a connection unit 11Z.

The collection unit 11X collects operation data of the air conditioner 10. The operation data of the air conditioner 10 includes information acquired by a plurality of sensors disposed in predetermined locations of the air conditioner 10. The operation data of the air conditioner 10 collected by the collection unit 11X is temporarily stored in the storage unit 11Y. The operation data of the air conditioner 10 includes a plurality of items of information. For example, the operation data of the air conditioner 10 includes items of information, such as the accumulated operating time, the indoor set temperature, the indoor temperature, the discharge pipe temperature of the compressor, the heat exchanger temperature, the outdoor temperature, the refrigerant pressure on the discharge side of the compressor, the refrigerant pressure on the suction side of the compressor, the state of an electromagnetic valve or a four-way switching valve, the inverter frequency of the compressor, the current value of the compressor, and the presence or absence of a transmission abnormality. The accumulated operating time is, for example, information acquired for each of the types of the components 11A to 11C and 12A to 12C. Specifically, the accumulated operating time of the compressor 11A serving as the component 11A increases in accordance with the operating time of the air conditioner 10. When the compressor 11A is replaced with a new compressor by replacement or the like, the accumulated operating time is reset (set to 0), and acquisition of the accumulated operating time of the new compressor is started. The accumulated operating time may not be acquired by a sensor, but may be acquired from the data stored in the storage unit 11Y of the air conditioner 10, or may be acquired from the data stored in the management apparatus 30.

The storage unit 11Y is configured to store various types of information and is constituted by a non-volatile memory, a volatile memory, and the like. The storage unit 11Y stores programs and the like for executing various functions of the air conditioner 10.

The connection unit 11Z is connected to a connection unit 24 of the transmitting apparatus 20 to communicate various types of information. In this embodiment, the collection unit 11X, the storage unit 11Y, and the connection unit 11Z are disposed in the outdoor unit 11, but may be disposed in each of the indoor units 12. Alternatively, a plurality of collection units 11X, a plurality of storage units 11Y, and a plurality of connection units 11Z may be disposed.

### (2-2) Transmitting Apparatus 20

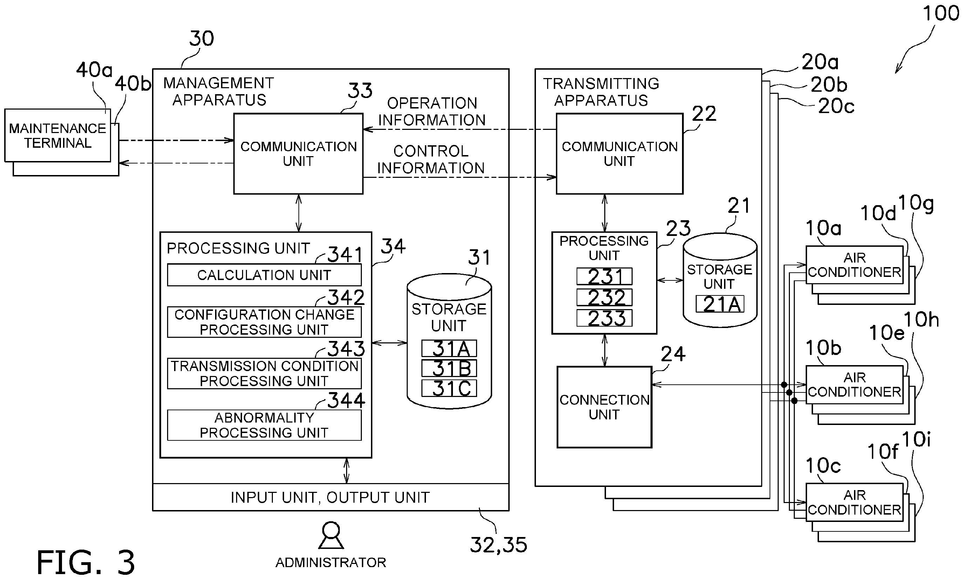

Various types of information on the air conditioners 10 are transmitted to the management apparatus 30 via the transmitting apparatuses 20 illustrated in Fig. 3. Each of the transmitting apparatuses 20 collects information from one or a plurality of corresponding air conditioners 10 by connecting to the connection unit(s) 11Z of the air conditioner(s) 10.

When a transmitting apparatus 20 is installed (newly installed) in the control area of the central management center 3 in correspondence with an air conditioner 10, management point information of the transmitting apparatus 20 is stored (registered) in the management apparatus 30 of the central management center 3. The management point information of the transmitting apparatus 20 includes identification information, a model name, a model code, and an address of the transmitting apparatus 20, information on the corresponding air conditioner 10, and so on. The identification information is, for example, a name, a machine number, a MAC address, an IP address, or the like, and may be set in advance by the administrator or the like or may be set through the storage of the management point information in the management apparatus 30. The transmitting apparatus 20 undergoes a configuration change, as necessary. The configuration change is, for example, addition, update, or removal of the transmitting apparatus 20. When a configuration change is performed on the transmitting apparatus 20, the management point information of the transmitting apparatus 20 stored in the management apparatus 30 is updated.

As illustrated in Fig. 3, each of the transmitting apparatuses 20 includes a storage unit 21, a communication unit 22, a processing unit 23, and a connection unit 24.

The storage unit 21 is configured to store various types of information and is constituted by a non-volatile memory, a volatile memory, and the like. The storage unit 21 stores programs for executing various functions of the transmitting apparatus 20. The storage unit 21 includes a transmission condition storage unit 21A.

The transmission condition storage unit 21A stores transmission conditions for transmitting pieces of device information to the management apparatus 30. Each of the transmission conditions includes information items to be transmitted to the management apparatus 30, and information such as frequency.

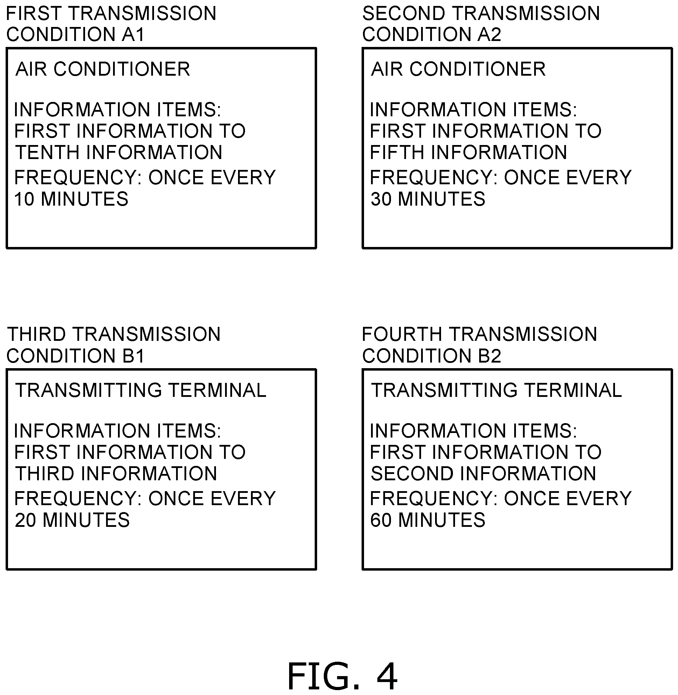

As illustrated in Fig. 4, the transmission conditions include, for example, a first transmission condition A1, a second transmission condition A2, a third transmission condition B1, and a fourth transmission condition B2. The transmission conditions are not limited to those presented here, and can be set as desired by the administrator or the like. In this embodiment, the first transmission condition A1 and the second transmission condition A2 are conditions for transmitting pieces of device information on the air conditioner 10, and the third transmission condition B1 and the fourth transmission condition B2 are conditions for transmitting pieces of device information on the transmitting apparatus 20. Further, the first transmission condition A1 and the third transmission condition are transmission conditions of the respective pieces of device information in a first period, and the second transmission condition A2 and the fourth transmission condition are transmission conditions of the respective pieces of device information in a second period. In this embodiment, the first period is a period of two weeks after a new installation or configuration change of the air conditioner 10 or the transmitting apparatus 20. The second period is a period after the lapse of two weeks from a new installation or configuration change of the air conditioner 10.

The first transmission condition A1 in this embodiment is a condition for transmitting information on the target air conditioner 10 to the management apparatus 30 in a certain period (the first period) after a new installation or configuration change of the air conditioner 10. The information on the air conditioner 10 acquired under the first transmission condition A1 is referred to as first device information. The first transmission condition A1 includes the identification information of the air conditioner 10 and the operation data of the air conditioner 10. The operation data of the air conditioner 10 includes ten items of information from first information to tenth information. In the first transmission condition A1, the first device information is collected from the air conditioner 10 with a frequency of once every 10 minutes and is transmitted to the management apparatus 30.

The second transmission condition A2 is a condition for transmitting information on the target air conditioner 10 to the management apparatus 30 after the lapse of a certain period (the second period) from a new installation or configuration change of the air conditioner 10. The information acquired under the second transmission condition A2 is referred to as second device information. The second device information includes the identification information of the air conditioner 10 and the operation data of the air conditioner 10. The operation data of the air conditioner 10 includes five items of information from first information to fifth information. The second device information is collected from the air conditioner 10 with a frequency of once every 30 minutes and is transmitted to the management apparatus 30.

The third transmission condition B1 is a condition for transmitting information on the transmitting apparatus 20 to the management apparatus 30 in a certain period (the first period) after a new installation or configuration change of the transmitting apparatus 20. The information on the transmitting apparatus 20 acquired under the third transmission condition B1 is referred to as third device information. The third device information includes the identification information of the transmitting apparatus 20 and the operation data of the transmitting apparatus 20. The operation data of the transmitting apparatus 20 includes three items of information from first information to third information. The first device information is collected from the transmitting apparatus 20 with a frequency of once every 20 minutes and is transmitted to the management apparatus 30.

The fourth transmission condition B2 is a condition for transmitting information on the transmitting apparatus 20 to the management apparatus 30 after the lapse of a certain period (the second period) from a new installation or configuration change of the transmitting apparatus 20. The information acquired under the fourth transmission condition B2 is referred to as fourth device information. The figure illustrates an example of the fourth device information acquired under the fourth transmission condition B2 in this embodiment. The fourth device information includes, as information items, the identification information of the transmitting apparatus 20 and the operation data of the transmitting apparatus 20. The operation data of the air conditioner 10 includes two items of information from first information to second information. The fourth device information is collected from the transmitting apparatus 20 with a frequency of once every 60 minutes and is transmitted to the management apparatus 30.

In this embodiment, the first device information is more detailed device information of the air conditioner 10 than the second device information. Specifically, the first device information includes more information items than the second device information. The first device information is collected more frequently (acquired at shorter time intervals) than the second device information. The third device information is more detailed device information of the transmitting apparatus 20 than the fourth device information. The third device information includes more information items than the fourth device information. The third device information is collected more frequently than the fourth device information.

The transmission conditions stored in the storage unit 21 can be updated as appropriate from the management apparatus 30 or any other apparatus. For example, the transmission conditions stored in the storage unit 21 are updated in accordance with a command from the management apparatus 30.

The communication unit 22 illustrated in Fig. 3 executes communication with an external network including the communication network NW1. With the functions of the communication unit 22, various types of information are exchanged between the transmitting apparatuses 20 and the management apparatus 30.

The processing unit 23 executes various types of information processing. The processing unit 23 includes a collection processing unit 231, an acquisition processing unit 232, and a transmission processing unit 233.

The collection processing unit 231 collects each piece of device information from the corresponding air conditioner 10 under the first transmission condition A1 or the second transmission condition A2 with the predetermined frequency. Each piece of device information collected by the collection processing unit 231 may be temporarily stored in the storage unit 21.

The acquisition processing unit 232 acquires each piece of device information from the transmitting apparatus 20 under the third transmission condition B1 or the fourth transmission condition B2 with the predetermined frequency. Each piece of device information collected by the acquisition processing unit 232 may be temporarily stored in the storage unit 21.

The transmission processing unit 233 controls communication between the transmitting apparatus 20 and the management apparatus 30 via the communication unit 22. For example, the transmission processing unit 233 transmits pieces of device information collected by the collection processing unit 231 from the air conditioners 10 to the management apparatus 30 under each transmission condition with the predetermined frequency. For example, the transmission processing unit 233 transmits each piece of device information acquired by the acquisition processing unit 232 from the transmitting apparatus 20 to the management apparatus 30 under each transmission condition with the predetermined frequency.

The connection unit 24 is connected to the connection units 11Z of the outdoor units 11. The transmitting apparatus 20 can collect pieces of device information from the air conditioners 10 via the connection unit 24.

### (2-3) Management Apparatus

The management apparatus 30 is connected to the transmitting apparatuses 20 and the maintenance terminals 40 via the communication network NW1 to manage the plurality of air conditioners 10. The management apparatus 30 communicates with the transmitting apparatuses 20 via the communication network NW1. The management apparatus 30 is a computer that manages device information and the like and is, for example, a super computer, a workstation, a personal computer, a tablet device, a smartphone, or the like. Alternatively, for example, the management apparatus 30 may be configured by connecting a plurality of computers or devices via a network.

As illustrated in Fig. 3, the management apparatus 30 includes a storage unit 31, an input unit 32, a communication unit 33, a processing unit 34, and an output unit 35.

The storage unit 31 is configured to store various types of information and includes a ROM, a RAM, and/or a hard disk or the like. Here, the storage unit 31 includes a management point information storage unit 31A, a device information storage unit 31B, and a transmission condition storage unit 31C. The storage unit 31 stores programs for executing various functions of the management apparatus 30.

When an air conditioner 10 or a transmitting apparatus 20 is newly installed, the management point information storage unit 31A individually stores management point information thereof. As a result, the air conditioner 10 or the transmitting apparatus 20 is registered in the management apparatus 30. At this time, the management point information may be manually registered by the administrator or the like or may be registered based on information acquired from the air conditioner 10 or the transmitting apparatus 20. Specifically, the administrator or the like inputs the corresponding management point information via the input unit 32 to register the management point information. Alternatively, the air conditioner 10 or the transmitting apparatus 20 transmits management point information thereof to the management apparatus 30, and the management apparatus 30 performs registration based on the received management point information.

The management point information stored in the management point information storage unit 31A is updated in response to a configuration change of the air conditioner 10 or the transmitting apparatus 20. The management point information may be manually updated by the administrator or the like or may be automatically updated based on the device information thereof. Specifically, the administrator or the like inputs information for update via the input unit 32. Alternatively, in the management apparatus 30, a configuration change processing unit 342 updates the management point information on the basis of the device information acquired from the air conditioner 10 or the transmitting apparatus 20.

The device information storage unit 31B individually stores a plurality of pieces of device information acquired from the air conditioners 10 or the transmitting apparatuses 20.

The transmission condition storage unit 31C individually stores transmission conditions for the air conditioners 10 or the transmitting apparatuses 20. The information stored in the transmission condition storage unit 31C includes information on the transmission conditions stored in the storage unit 21 of each of the transmitting apparatuses 20. In this embodiment, the first transmission condition A1 is stored as a transmission condition corresponding to the air conditioners 10 in the first period, and the second transmission condition A2 is stored as a transmission condition corresponding to the air conditioners 10 in the second period. Further, the third transmission condition B1 is stored as a transmission condition corresponding to the transmitting apparatuses 20 in the first period, and the fourth transmission condition B2 is stored as a transmission condition corresponding to the transmitting apparatuses 20 in the second period. The information stored in the transmission condition storage unit 31C is rewritten as appropriate, thereby making it possible to change the corresponding transmission condition in the transmitting apparatuses 20. For example, in a case where the first transmission condition A1 stored in the transmission condition storage unit 31C as the transmission condition for the air conditioners 10 is rewritten to the second transmission condition A2, the management apparatus 30 sends a request to rewrite the transmission condition in the transmitting apparatuses 20 corresponding to the air conditioners 10 via the communication unit 33. Each of the transmitting apparatuses 20 rewrites the transmission condition for the air conditioners 10 stored in the storage unit 21 from the first transmission condition A1 to the second transmission condition A2.

The storage unit 31 is capable of storing any information other than those in the various storage units described above.

The input unit 32 is an interface for inputting information to the management apparatus 30. For example, the input unit 32 is implemented by a keyboard, a mouse, and/or a touch screen or the like. For example, the input unit 32 enables input of information to various reception screens.

The communication unit 33 is an interface for communicating with the transmitting apparatuses 20 and the maintenance terminals 40. Specifically, the communication unit 33 receives pieces of device information from the transmitting apparatuses 20. The pieces of device information received by the communication unit 33 and other information are stored in the storage unit 31.

The processing unit 34 is configured to execute various types of information processing in the management apparatus 30 and is constituted by a CPU, a cache memory, and the like. The processing unit 34 has functions as a calculation unit 341, the configuration change processing unit 342, a transmission condition processing unit 343, and an abnormality processing unit 344.

The calculation unit 341 performs calculation related to information processing based on the information received by the communication unit 33.

The configuration change processing unit 342 determines, based on each piece of device information stored in the device information storage unit 31B, whether a configuration change has been performed on the corresponding air conditioner 10. In this embodiment, if, in each piece of device information, the identification information of the air conditioner 10 is different from the identification information stored in the management point information storage unit 31A, the configuration change processing unit 342 determines that a configuration change has been performed. Alternatively, if, in each piece of device information, the item of the accumulated operating times of the components 11A to 11C and 12A to 12C of the air conditioner 10 is reset, the configuration change processing unit 342 determines that a configuration change has been performed. When the configuration change processing unit 342 determines that a configuration change has been performed, the configuration change processing unit 342 performs a process of updating the management point information of the air conditioner 10 stored in the management point information storage unit 31A.

The transmission condition processing unit 343 changes the transmission conditions stored in the transmission condition storage unit 31D. When a certain period has elapsed since the first transmission condition A1 was set or if the management point information stored in the management point information storage unit 31A is changed, the transmission condition processing unit 343 changes the transmission condition. The transmission conditions may be changed manually by the administrator or the like.

The abnormality processing unit 344 performs, based on each of the pieces of device information received from the air conditioners 10, a process of determining an abnormality in a corresponding one of the air conditioners 10. An "abnormality" is determined in a case where the operation data included in the device information is not within a range of a reference value. If the abnormality processing unit 344 determines that the air conditioner 10 has an abnormality, the abnormality processing unit 344 executes a process of creating information (abnormality information) for notifying the administrator or supervisor of the presence or absence or the like of an abnormality related to the air conditioner 10. The abnormality processing unit 344 causes the output unit 35 to output the created abnormality information.

The output unit 35 is configured to output various types of information and is constituted by a variety of devices such as a display and a speaker. For example, the output unit 35 outputs an input screen or the like for receiving input of various types of information. For example, the output unit 35 outputs the abnormality information created by the abnormality processing unit 344. The various types of information output by the output unit 35 can also be output to the maintenance terminals 40 via the communication network NW1.

### (2-4) Maintenance Terminal

The maintenance terminals 40 are terminals operated by the maintenance workers of the air conditioners 10. The maintenance terminals 50 receive abnormality information from the management apparatus 30. This enables the maintenance workers to diagnose the air conditioner 10 or the transmitting apparatus 20 in which an abnormality is detected and to perform troubleshooting and the like.

### (3) Device Management Process in Device Management System 100

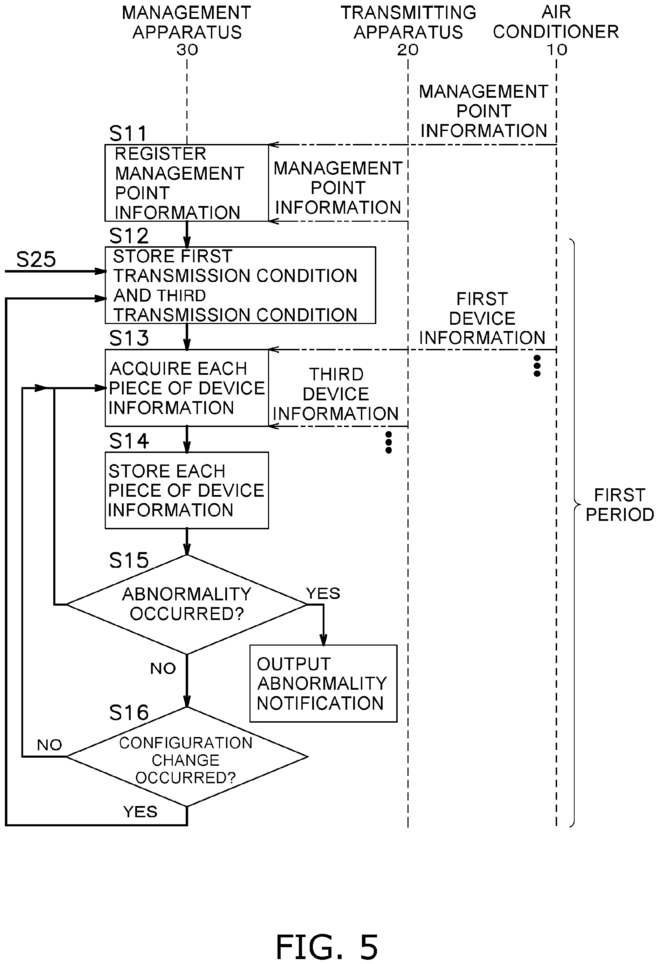

Fig. 5 is a schematic diagram for describing a flow of processing performed in the device management system 100 according to this embodiment. While Fig. 5 illustrates the flow of processing in a relationship among one management apparatus 30, one air conditioner 10, one transmitting apparatus 20, and one maintenance terminal 40, the processing illustrated in Fig. 5 is individually performed between the management apparatus 30 and the air conditioners 10, the transmitting apparatuses 20, and the maintenance terminals 40.

### (3-1) Processing in First Period

First, a flow of processing performed by the device management system 100 in the first period will be described.

In step S11, the air conditioner 10 and the transmitting apparatus 20 are installed in the control area of the central management center 3. The management apparatus 30 stores management point information of the air conditioner 10 and management point information of the transmitting apparatus 20 in the storage unit 31. As a result, management of the device (the air conditioner 10) is started in the device management system 100.

In step S12, the first transmission condition A1 and the third transmission condition B1 are stored in the storage unit 31 of the management apparatus 30 and the storage unit 21 of the transmitting apparatus 20. Accordingly, the first period is started. In this embodiment, the first period is two weeks.

In step S13, the management apparatus 30 acquires the first device information and the third device information under the first transmission condition A1 and the third transmission condition B1. Specifically, the collection processing unit 231 of the transmitting apparatus 20 collects the first device information, which is acquired by the collection unit 11X of the air conditioner 10, under the first transmission condition A1. The transmitting apparatus 20 transmits the collected first device information to the management apparatus 30. Further, the transmitting apparatus 20 acquires the third device information, which is acquired by the acquisition processing unit 232, under the third transmission condition B1. The transmitting apparatus 20 transmits the acquired third device information to the management apparatus 30.

In step S14, the management apparatus 30 stores the pieces of device information acquired via the communication unit 33 in the storage unit 31.

In step S15, the abnormality processing unit 344 of the management apparatus 30 determines an abnormality in the air conditioner 10 or the transmitting apparatus 20 on the basis of the pieces of device information stored in the device information storage unit 31B. If it is determined that the air conditioner 10 or the transmitting apparatus 20 has an abnormality, the abnormality processing unit 344 creates abnormality information and outputs the abnormality information from the output unit 35. The abnormality information is output to the maintenance terminal 40 via, for example, the output unit 35.

In step S16, the configuration change processing unit 342 of the management apparatus 30 determines, based on the information stored in the device information storage unit 31B, whether a configuration change has been performed on the air conditioner 10. If it is determined in step S16 that no configuration change has been performed on the air conditioner 10, the process returns to step S13. In other words, the first device information is repeatedly collected under the first transmission condition A1 until the first period ends.

On the other hand, if it is determined in step S16 that a configuration change has been performed on the air conditioner 10, the configuration change processing unit 342 stores new management point information in the management point information storage unit 31A, and the process returns to step S12. In other words, the configuration change processing unit 342 causes the management apparatus 30 to store the first transmission condition A1 again as a transmission condition for the air conditioner 10.

### (3-2) Processing in Second Period

Next, a flow of processing performed by the device management system 100 in the period after the end of the first period and in the second period will be described.

In step S21, when the first period ends, the transmission condition processing unit 343 updates the transmission conditions stored in the transmission condition storage unit 31D. Specifically, the first transmission condition A1 stored in the transmission condition storage unit 31D is updated to the second transmission condition A2. The third transmission condition B1 stored in the transmission condition storage unit 31D is updated to the fourth transmission condition B2. Accordingly, the second period is started.

In step S22, the management apparatus 30 acquires the second device information and the fourth device information under the second transmission condition A2 and the fourth transmission condition B2. Specifically, the transmitting apparatus 20 collects the second device information, which is acquired by the acquisition unit of the air conditioner 10, under the second transmission condition A2. The transmitting apparatus 20 transmits the collected second device information to the management apparatus 30. Further, the transmitting apparatus 20 acquires the fourth device information, which is acquired by the acquisition processing unit, under the fourth transmission condition B2. The transmitting apparatus 20 transmits the acquired fourth device information to the management apparatus 30.

In step S23, the management apparatus 30 stores the pieces of device information acquired via the communication unit in the storage unit 31.

In step S24, the abnormality processing unit 344 of the management apparatus 30 determines an abnormality in the air conditioner 10 or the transmitting apparatus 20 on the basis of the pieces of device information stored in the device information storage unit 31B. If it is determined that the air conditioner 10 or the transmitting apparatus 20 has an abnormality, the abnormality processing unit 344 creates abnormality information and outputs the abnormality information from the output unit. The abnormality information is output to the maintenance terminal 40 via, for example, the output unit 35.

In step S25, the configuration change processing unit 342 of the management apparatus 30 determines, based on the information stored in the device information storage unit 31B, whether a configuration change has been performed on the air conditioner 10. If it is determined in step S25 that no configuration change has been performed on the air conditioner 10, the process returns to step S22. In other words, the first device information is repeatedly collected under the second transmission condition A2 and the fourth transmission condition B2.

On the other hand, if it is determined in step S25 that a configuration change has been performed on the air conditioner 10, in step 26, the configuration change processing unit 342 stores new management point information in the management point information storage unit 31A, and then the process returns to step S12 for the first period. In other words, the configuration change processing unit 342 causes the management apparatus 30 to store the first transmission condition A1 again as a transmission condition for the air conditioner 10.

### (4) Features

(4-1) The device management system 100 according to this embodiment includes the management apparatus 30 and the transmitting apparatus 20. The management apparatus 30 manages device information. The device information includes the identification information of the air conditioner 10 serving as a device and operation data of the device. The device information is information related to the air conditioner 10. The transmitting apparatus 20 collects the device information from the air conditioner 10. The transmitting apparatus 20 transmits the device information to the management apparatus 30. The management apparatus 30 changes the condition for transmitting the device information from the transmitting apparatus 20 to the management apparatus 30, in accordance with the execution of a new installation or a configuration change.

In the device management system 100 according to this embodiment, the new installation is the new installation of the air conditioner 10 or the transmitting apparatus 20. The configuration change is any one of addition, update, and removal of the air conditioner 10 or the transmitting apparatus 20.

In a certain period after the new installation or the configuration change is executed, an abnormality is likely to occur due to an initial failure or the like that has failed to be detected in a trial operation of the management apparatus 30 or the transmitting apparatus 20. The device management system 100 presented in this embodiment requests the management apparatus 30 or the transmitting apparatus 20 to transmit detailed device information in a certain period after the new installation or the configuration change is executed. In the detailed device information, a large number of information items are included in the device information, or the device information is frequently transmitted. This enables an abnormality that has occurred in the management apparatus 30 or the transmitting apparatus 20 to be detected at an early stage. In addition, even if an abnormality has occurred, since the detailed device information is stored in the management apparatus 30, it is easy to identify the source or the like of the abnormality. In the device management system 100, therefore, the air conditioner 10 and the transmitting apparatus 20 can be efficiently managed.

(4-2) The operation data includes at least information related to the accumulated operating time of a component. In a case where the information related to the accumulated operating time of the component is reset, the management apparatus 30 determines that a configuration change has been executed. Alternatively, in a case where the management point information of the air conditioner 10 is changed, the management apparatus 30 determines that a configuration change has been executed. The management point information of the air conditioner 10 is set on the basis of the device information. The management apparatus changes the condition for transmitting the device information in accordance with execution of a new installation or a configuration change.

The management apparatus 30 can automatically determine that a configuration change has been executed, without requiring the administrator or the like. In addition, the management apparatus 30 can automatically change the condition for transmitting the device information. This enables efficient management of the air conditioner 10.

(4-3) The management apparatus 30 changes, as a condition, at least an information item included in the device information or a frequency with which the transmitting apparatus 20 transmits the device information to the management apparatus 30.

The management apparatus 30 can acquire detailed device information by changing an information item included in the device information or the frequency with which the device information is transmitted.

(4-4) The management apparatus 30 monitors an abnormality in the air conditioner 10 on the basis of the device information.

The management apparatus 30 can monitor an abnormality in the air conditioner 10 by acquiring the operation data included in the device information.

### (5) Modifications

(5-1) In this embodiment, the management apparatus 30 changes the condition for transmitting the device information from the transmitting apparatus 20 to the management apparatus 30. However, the condition for transmitting the device information to the management apparatus 30 may be changed by the transmitting apparatus 20. The transmitting apparatus 20 may store in the storage unit 21 information for changing the condition for transmitting the device information. In the transmitting apparatus 20, the processing unit 23 may perform a process for changing the condition for transmitting the device information. The condition changed by the transmitting apparatus 20 is transmitted to the management apparatus 30 via the communication unit 22.

In the transmitting apparatus 20, furthermore, the processing unit 23 may determine that a configuration change has been executed.

(5-2) In this embodiment, the device information is acquired for each air conditioner 10 or each transmitting apparatus 20. However, the device information may be acquired for each refrigerant system or each of the components 12A to 12C. The condition for acquiring the device information may be a condition for each device, for each transmitting apparatus, for each refrigerant system including devices, or for each component. Further, the condition for acquiring the device information may be changed for each device, for each transmitting apparatus, for each refrigerant system including devices, or for each component.

(5-3) In this embodiment, the configuration change is any one of addition, update, and removal of the air conditioner 10 or the transmitting apparatus 20. However, the configuration change may include replacement of the components 12A to 12C included in the air conditioner 10.

(5-4) The management apparatus 30 or the transmitting apparatus 20 according to this embodiment may change, as a condition, a transmission path through which the transmitting apparatus 20 transmits the device information to the management apparatus 30.

Accordingly, the management apparatus 30 can acquire the device information via a more efficient transmission path.

(5-5) The transmitting apparatus 20 presented in this embodiment may be included in the air conditioner 10. Specifically, the air conditioner 10 includes a processing unit that executes the processes performed by the transmitting apparatus 20, or a program for executing the processes performed by the transmitting apparatus 20. The air conditioner 10 including the transmitting apparatus 20 changes the condition for transmitting the device information from the air conditioner 10 including the transmitting apparatus 20 to the management apparatus 30, in accordance with the execution of a new installation or a configuration change.

(6) While an embodiment of the present disclosure has been described, it will be understood that forms and details can be changed in various ways without departing from the spirit and scope of the present disclosure as recited in the claims.

### REFERENCE SIGNS LIST

- 10a to 10f: device
- 12Aa to 12Ca, 12Ab to 12Cb, 12Ac to 12Cc: component
- 20: transmitting apparatus
- 30: management apparatus
- 100: device management system

### CITATION LIST

### PATENT LITERATURE

PTL 1: Japanese Unexamined Patent Application Publication No. 2012-193885

## Claims

1. A device management system (100) comprising:
a management apparatus (30) configured to manage device information, the device information including identification information of a device (10) and operation data of the device (10); and
a transmitting apparatus (20) configured to collect the device information from the device (10) and transmit the device information to the management apparatus (30),
wherein
the management apparatus (30) or the transmitting apparatus (20) is configured to monitor an abnormality in the device (10) on the basis of the device information,
**characterized in that**:
the management apparatus (30) includes a configuration change processing unit (342) configured to determine, based on the device information, whether a configuration change has been performed on the device (10),
the configuration change being any one of addition, update, and removal of the device (10), or replacement of a component (11, 12) included in the device (10),
the management apparatus (30) or the transmitting apparatus (20) is configured to change a condition for transmitting the device information from the transmitting apparatus (20) to the management apparatus (30) when it is determined that the configuration change has been executed,
the condition being at least one of
an information item included in the operation data,
a frequency with which the transmitting apparatus (20) is configured to transmit the device information to the management apparatus (30), and
a transmission path through which the transmitting apparatus (20) is configured to transmit the device information to the management apparatus (30).

2. The device management system (100) according to Claim 1, wherein
the operation data includes at least information related to an accumulated operating time of the component (11, 12), and,
in a case where the information related to the accumulated operating time of the component (11, 12) is reset, the management apparatus (30) is configured to determine that the configuration change has been executed.

3. The device management system (100) according to Claim 1 or 2, wherein:
the management apparatus (30) or the transmitting apparatus (20) includes a management point information storage unit (31A),
the management point information storage unit (31A) being configured to, when the device (10) is newly installed,
store management point information which includes identification information of at least one of the newly installed device (10) and a component (11, 12) included in the newly installed device (10), and
update the stored management point information in response to the configuration change of the device (10); and,
in a case where the stored management point information is changed, the management apparatus (30) is configured to determine that the configuration change has been executed.

4. The device management system (100) according to Claim 3, wherein
the management point information of the device (10) is set on the basis of the device information.

5. The device management system (100) according to any one of Claims 1 to 4, wherein:
the management system (100) is for managing a plurality of devices (10a to 10f) and a plurality of transmitting apparatuses (20a, 20b) using the management apparatus (30);
each of the devices includes a plurality of components; and
the management apparatus (30) or the transmitting apparatus (20) is configured to change the condition for transmitting the device information, at least for each device (10), for each transmitting apparatus (20), or for each component (11, 12), in accordance with execution of the configuration change.

## Patentansprüche

1. Geräteverwaltungssystem (100), das aufweist:
eine Verwaltungsvorrichtung (30), die konfiguriert ist, Geräteinformationen zu verwalten, wobei die Geräteinformationen Identifikationsinformationen eines Geräts (10) und Betriebsdaten des Geräts (10) enthalten; und
eine Übertragungsvorrichtung (20), die konfiguriert ist, Geräteinformationen von der Gerät (10) zu erfassen und die Geräteinformationen an die Verwaltungsvorrichtung (30) zu übertragen, wobei
die Verwaltungsvorrichtung (30) oder die Übertragungsvorrichtung (20) konfiguriert ist, eine Abnormalität im Gerät (10) auf der Grundlage der Geräteinformationen zu überwachen,
**dadurch gekennzeichnet, dass**
die Verwaltungsvorrichtung (30) eine Konfigurationsänderungs-Verarbeitungseinheit (342) enthält, die konfiguriert ist, basierend auf den Geräteinformationen zu festzustellen, ob eine Konfigurationsänderung am Gerät (10) durchgeführt wurde,
wobei es sich bei der Konfigurationsänderung um eine Hinzufügung, Aktualisierung oder Entfernung des Geräts (10) oder um den Austausch einer im Gerät (10) enthaltenen Komponente (11, 12) handelt,
die Verwaltungsvorrichtung (30) oder die Übertragungsvorrichtung (20) konfiguriert ist, eine Bedingung für die Übertragung der Geräteinformationen von der Übertragungsvorrichtung (20) an die Verwaltungsvorrichtung (30) zu ändern, wenn festgestellt wird, dass die Konfigurationsänderung ausgeführt worden ist,
wobei die Bedingung mindestens eine ist von:
ein in den Betriebsdaten enthaltenes Informationselement,
einer Frequenz, mit der die Übertragungsvorrichtung (20) konfiguriert ist, die Geräteinformationen an die Verwaltungsvorrichtung (30) zu übertragen, und
einen Übertragungspfad, über den die Übertragungsvorrichtung (20) konfiguriert ist, die Geräteinformationen an die Verwaltungsvorrichtung (30) zu übertragen.

2. Geräteverwaltungssystem (100) nach Anspruch 1, wobei
die Betriebsdaten mindestens Informationen enthalten, die sich auf eine akkumulierte Betriebszeit der Komponente (11, 12) beziehen, und
in einem Fall, in dem die Informationen, die sich auf die akkumulierte Betriebszeit der Komponente (11, 12) beziehen, zurückgesetzt werden, die Verwaltungsvorrichtung (30) konfiguriert ist, zu bestimmen, dass die Konfigurationsänderung ausgeführt wurde.

3. Geräteverwaltungssystem (100) nach Anspruch 1 oder 2, wobei:
die Verwaltungsvorrichtung (30) oder die Übertragungsvorrichtung (20) eine Verwaltungspunkt-Informationsspeichereinheit (31A) aufweist,
wobei die Verwaltungspunktinformations-Speichereinheit (31A) konfiguriert ist, um, wenn die Gerät (10) neu installiert wird:
Managementpunktinformationen zu speichern, die Identifikationsinformationen von dem neu installierten Gerät (10) und/oder einer im neu installierten Gerät (10) enthaltenen Komponente (11, 12) enthalten, und
die gespeicherten Verwaltungspunktinformationen als Reaktion auf die Konfigurationsänderung des Geräts (10) zu aktualisieren; und
in einem Fall, in dem die gespeicherten Verwaltungspunktinformationen geändert werden, die Verwaltungsvorrichtung (30) konfiguriert ist, festzustellen, dass die Konfigurationsänderung ausgeführt worden ist.

4. Geräteverwaltungssystem (100) nach Anspruch 3, wobei die Verwaltungspunktinformationen des Geräts (10) auf der Grundlage der Geräteinformationen eingestellt werden.

5. Geräteverwaltungssystem (100) nach einem der Ansprüche 1 bis 4, wobei:
das Verwaltungssystem (100) zum Verwalten von mehreren Geräten (10a bis 10f) und mehreren Übertragungsvorrichtungen (20a, 20b) unter Verwendung der Verwaltungsvorrichtung (30) dient;
jedes der Geräte mehrere Komponenten enthält; und
die Verwaltungsvorrichtung (30) oder die Übertragungsvorrichtung (20) konfiguriert ist, die Bedingung zum Übertragen der Geräteinformationen zumindest für jedes Gerät (10), für jede Übertragungsvorrichtung (20) oder für jede Komponente (11, 12) gemäß der Ausführung der Konfigurationsänderung zu ändern.

## Revendications

1. Système de gestion de dispositif (100), comprenant :
un appareil de gestion (30) prévu pour gérer des informations de dispositif, lesdites informations de dispositif comprenant des informations d'identification d'un dispositif (10) et des données de fonctionnement dudit dispositif (10) ; et
un appareil de transmission (20) prévu pour collecter les informations de dispositif (10) et transmettre celles-ci à l'appareil de gestion (30),
où
l'appareil de gestion (30) ou l'appareil de transmission (20) sont prévus pour surveiller une anomalie dans le dispositif (10) sur la base des informations de dispositif, **caractérisé en ce que** :
l'appareil de gestion (30) comprend une unité de traitement de changement de configuration (342) prévue pour déterminer, sur la base des informations de dispositif, si un changement de configuration a été effectué sur l'appareil (10), ledit changement de configuration étant l'un quelconque des changements suivants : ajout, mise à jour et suppression du dispositif (10), ou remplacement d'un composant (11, 12) compris dans le dispositif (10),
l'appareil de gestion (30) ou l'appareil de transmission (20) sont prévus pour modifier une condition de transmission des informations de dispositif de l'appareil de transmission (20) à l'appareil de gestion (30) lorsqu'il est déterminé que le changement de configuration a été exécuté,
la condition étant
un élément d'information inclus dans les données d'exploitation et/ou une fréquence avec laquelle l'appareil de transmission (20) est configuré pour transmettre les informations de dispositif à l'appareil de gestion (30) et/ou un trajet de transmission avec lequel l'appareil de transmission (20) est configuré pour transmettre les informations de dispositif à l'appareil de gestion (30).

2. Système de gestion de dispositif (100) selon la revendication 1, où les données de fonctionnement comprennent au moins des informations relatives à une durée de fonctionnement cumulée du composant (11, 12), et, dans le cas où les informations relatives à la durée de fonctionnement cumulée du composant (11, 12) sont réinitialisées, l'appareil de gestion (30) est configuré pour déterminer que le changement de configuration a été exécuté.

3. Système de gestion de dispositif (100) selon la revendication 1 ou la revendication 2, où :
l'appareil de gestion (30) ou l'appareil de transmission (20) comprennent une unité de stockage d'informations de point de gestion (31A),
ladite unité de stockage d'informations de point de gestion (31A) étant prévue pour, lorsque le dispositif (10) est nouvellement installé,
stocker des informations de point de gestion comprenant des informations d'identification du dispositif nouvellement installés (10) et/ou d'un composant (11, 12) compris dans le dispositif nouvellement installé (10), et
mettre à jour les informations de point de gestion stockées en réaction au changement de configuration du dispositif (10) ; et où,
dans le cas où les informations de point de gestion stockées sont modifiées, l'appareil de gestion (30) est configuré pour déterminer que le changement de configuration a été exécuté.

4. Système de gestion de dispositif (100) selon la revendication 3, où les informations relatives au point de gestion du dispositif (10) sont définies sur la base des informations de dispositif.

5. Système de gestion de dispositif (100) selon l'une des revendications 1 à 4, où :
le système de gestion (100) est destiné à gérer une pluralité de dispositifs (10a à 10f) et une pluralité d'appareils de transmission (20a, 20b) au moyen de l'appareil de gestion (30) ;
chacun des dispositifs comprend une pluralité de composants ; et
l'appareil de gestion (30) ou l'appareil de transmission (20) sont prévus pour modifier la condition de transmission des informations de dispositif, au moins pour chaque dispositif (10), pour chaque appareil de transmission (20) ou pour chaque composant (11, 12) en fonction de l'exécution du changement de configuration.
